# EUROPEAN PATENT APPLICATION

(11) **EP 4 678 266 A1**
(43) Date of publication of application: **14.01.2026**
(21) Application number: 24187265.4
(22) Date of filing: 09.07.2024
(51) Int. Cl.: B01D 45/16, B04C 5/04, B04C 5/13

(54) **ONE-STAGE WATER SEPARATOR SYSTEM**

(71) Applicant: MANN+HUMMEL GmbH, 71636 Ludwigsburg (DE)
(72) Inventor: NOCERA, Ettore, 71636 Ludwigsburg (DE); WEBER, Andreas, 71636 Ludwigsburg (DE)
(74) Representative: Mann + Hummel Intellectual Property

(57) **Abstract**

A one-stage water separator device (1) comprises a water separator housing (2) comprising a water separation chamber (3) and a water collection chamber (4), a water-laden volume flow inlet port (8) defining a water-laden volume flow inlet channel (11) for channeling a water-laden volume flow into the water separation chamber (3), a water volume flow outlet port (10) defining a water volume flow outlet channel (12) for channeling a water volume flow out of the water collection chamber (4), a water-unladen volume flow outlet port (9) defining a water-unladen volume flow outlet channel (13) for channeling a water-unladen volume flow out of the water separation chamber (3), and an immersion tube (5) comprising an immersion tube portion (7) immersed in the water separation chamber (3) and for fluidically connecting the water-unladen volume flow outlet port (9) with the water separation chamber (3).

## Description

### Technical Field

Embodiments relate to a one-stage water separator device comprising a water separator housing comprising a water separation chamber and a water collection chamber, a water-laden volume flow inlet port defining a water-laden volume flow inlet channel for channeling a water-laden volume flow into the water separation chamber, a water volume flow outlet port defining a water volume flow outlet channel for channeling a water volume flow out of the water collection chamber, a water-unladen volume flow outlet port defining a water-unladen volume flow outlet channel for channeling a water-unladen volume flow out of the water separation chamber, an immersion tube comprising an immersion tube portion immersed in the water separation chamber and for fluidically connecting the water-unladen volume flow outlet port with the water separation chamber.

### Background Art

One-stage water separator devices are per se known in the art. They are, e.g., typically installed in fuel cell vehicles at defined positions in their anode path and cathode path. In the anode path, an exhaust gas side is typically considered.

Said exhaust gas side provides the water-laden volume flow. The water-laden volume flow typically comprises an air volume flow which is laden with water in the form of water droplets. Said water-laden volume flow enters the one-stage water separator device via the water-laden volume flow inlet port. The water-laden volume flow then flows through the water-laden volume flow inlet channel. It enters into the water separation chamber.

Inside the water separation chamber the water droplets in the water-laden volume flow adhere to the inner wall of the water separation chamber. During this adhesion process water droplets of different sizes merge with each other. The so-formed larger water droplets are heavier and thus subjected to larger gravitational pull. Said gravitational pull acts in a direction towards the water collection chamber. Over time the water content of the water-laden volume flow accumulates inside the water collection chamber.

As a result, the water-laden volume flow separates into the water volume flow and the water-unladen volume flow. On the one hand, the water volume flow consists of the water droplets separated from the water-laden volume flow. It flows downwards inside the water collection chamber to the water volume flow outlet channel. The water volume flow outlet channel channels the water volume flow through the water volume flow outlet port out of the one-stage water separator device. The separated water is partly released into the environment of the fuel cell vehicle and partly reused in its fuel cell system. Reusing the separated water can comprise usage in a cooling system, a compressor or a humidifier. On the other hand, the water-unladen volume flow consists of the remaining volume flow without the water droplets previously present in the water-laden volume flow, i.e., typically of an air volume flow. It flows inside the water separation chamber after a flow diversion from horizontal to vertical through the water-unladen volume flow outlet channel. The water-unladen volume flow outlet channel channels the water-unladen volume flow through the immersion tube portion to the water-unladen volume flow outlet port out of the one-stage water separator device. The water-unladen volume flow is communicated further to different components of the fuel cell vehicle.

Different fuel cell vehicles may, however, comprise differently sized fuel cell systems. As such, the one-stage water separator device must be adapted to the required size and volume flow of the different fuel cell systems. As a result, the one-stage water separator device must be adapted to different installation spaces in different applications while its water separation performance should remain as consistent as possible at the same time.

### Summary

It is therefore an objective of the embodiments to provide a one-stage water separator device which is adapted to a special installation space in a fuel cell system, whereby the water collection chamber should be located below the lowest point of the overall system. At the same time, the one-stage water separator device can provide high separation performance due to defined flow diversions.

This objective is achieved in that an axial extension of the immersion tube portion essentially corresponds to an axial transition area between the water separation chamber and the water collection chamber. Alternatively or additionally, the objective may be achieved by special design and a position of a water-laden volume flow inlet channel for modifying a velocity and a direction of the water-laden volume flow.

Further advantageous embodiments are provided in the dependent claims.

In an embodiment a maximum axial extension of an inlet channel diameter of the water-laden volume flow inlet channel essentially corresponds to an axial extension of the immersion tube portion.

The axial extension of the immersion tube portion may correspond to a vertical direction with respect to the installation orientation of the one-stage water separator device. The axial extension of the inlet channel diameter may run inclined to the axial extension of the immersion tube portion. In designing the dimension of the inlet channel diameter essentially equal to the dimension of the immersion tube portion the available space within the one-stage water separator device is optimally used. Hence, the one-stage water separator device can be designed in a compact way suitable for small installation spaces. At the same time, the water separation performance is increased.

In another embodiment an axial end of the inlet channel diameter facing the water separation chamber essentially corresponds to an axial end of the immersion tube portion facing the water collection chamber.

When viewed in a vertical direction (i.e., the axial direction of the immersion tube portion) with respect to the orientation of the one-stage water separator device the immersion tube portion and the inlet channel diameter terminate essentially at the same height. The available space within the water separation chamber is optimally used. The water separation performance can be increased while at the same time restricting the necessary installation space for the one-stage water separator device to a minimum.

In another embodiment the axial extension of the immersion tube portion essentially corresponds to an axial extension of the water separation chamber.

Again, the available space within the water separation chamber is optimally used. The water separation performance can be increased while at the same time restricting the necessary installation space for the one-stage water separator device to a minimum.

In another embodiment a radial extension of the immersion tube portion corresponds to at least one half, preferably at least two thirds, of a radial extension of the water separation chamber.

The radial extension of the immersion tube portion may correspond to a horizontal direction with respect to the installation orientation of the one-stage water separator device. The radial extension of the immersion tube portion may run essentially parallel to the radial extension of the water separation chamber. The radial direction of the immersion tube portion is perpendicular to the axial direction of the immersion tube portion. The radial extension of the immersion tube portion is therefore dimensioned relatively large compared to the radial extension of the water separation chamber. As a result, the flow velocity of the water-unladen volume flow within the water-unladen volume flow outlet channel is reduced. This is considered advantageous from different points of view. On the one hand, different downstream components of the fuel cell vehicle to which the water-unladen volume flow is communicated may require lower flow velocities of the water-unladen volume flow. On the other hand, the amount of water droplets potentially still dragged along in the water-unladen volume flow is reduced as the flow velocity of the water-unladen volume flow decreases. The water separation performance is improved.

In another embodiment the immersion tube further comprises a deflector projection for deflecting the water-laden volume flow, the deflector projection being arranged at an end of the immersion tube portion facing the water collection chamber.

The deflector projection may be arranged at an outer wall of the immersion tube portion. The deflector projection may extend in a circumferential direction of the immersion tube portion. It may extend around the entire circumference of the immersion tube portion. The deflector projection serves a dual purpose. On the one hand, it deflects the water-laden volume flow inside the water separation chamber to the inner walls of the latter. The water droplets still contained in an inner zone of the water-laden volume flow may then move radially outwards and adhere to the inner walls of the water separation chamber. There they may combine with other water droplets to form larger water droplets. Said larger water droplets may then descend into the water collection chamber by means of gravity. Hence, the water separation performance is improved. On the other hand, the deflector projection also constitutes a water volume flow barrier between the water separation chamber and the water collection chamber. Water droplets whirled up inside the water collection chamber hit the deflector projection and are deflected back into the water collection chamber. They are thereby prevented from re-entering the water separation chamber. The water separation performance is improved.

In another embodiment the one-stage water separator device further comprises a swirl generator for generating a swirl in the water-laden volume flow, the swirl generator being arranged at an end of the immersion tube portion facing the water collection chamber.

The water-laden volume flow entering the water separation chamber is first deflected in the direction towards the water collection chamber by means of the inner walls of the water separation chamber. It then flows into the swirl generator. The swirl generator may be arranged at an outer wall of the immersion tube portion. The swirl generator may comprise, for example, a plurality of vanes. They are placed around the entire circumference of the immersion tube portion. The swirl generator is hence arranged coaxially with the immersion tube portion. The swirl generator is preferably arranged coaxially with a center axis of the water separation chamber. An angled position of the vanes causes centrifugal forces to act on the water-laden volume flow. The water droplets contained in the water-laden volume flow are hence forced against the inner walls of the water separation chamber. There the water droplets adhere. They may then combine with other water droplets to form larger water droplets. Said larger water droplets may then descend into the water collection chamber. Hence, the water separation performance is improved.

In another embodiment a radial extension of the water separation chamber is essentially constricted to a radial extension of the swirl generator over essentially an entire axial extension of the swirl generator.

The axial extension of the swirl generator may correspond to a vertical direction with respect to the installation orientation of the one-stage water separator device. The axial extension of the swirl generator may run essentially parallel to the axial extension of the immersion tube portion. The radial extension of the swirl generator may correspond to a horizontal direction with respect to the installation orientation of the one-stage water separator device. The radial extension of the swirl generator may run essentially parallel to the radial extension of the water separation chamber. In this way, a very small and defined gap with predetermined dimensions is provided between the swirl generator and the inner walls of the water separation chamber. As a result, the flow velocity of the water-laden volume flow is increased in the region of the radial constriction. The increased flow velocity results in an improved water separation performance.

In another embodiment the axial extension of the swirl generator corresponds to at most one half, preferably at most one third, of the axial extension of the immersion tube portion.

The swirl generator is thus comparatively small compared to the immersion tube portion. This reduces the overall package size of the one-stage water separator device. Installation in small installation spaces becomes possible. Moreover, a comparatively small swirl generator may also contribute to reduce the pressure loss of the volume flow within the one-stage water separator device.

In another embodiment the water-laden volume flow inlet channel is arranged essentially perpendicularly or tangentially to a circumferential direction of the water separator housing.

The water-laden volume flow is either injected perpendicularly or tangentially with respect to the circumferential direction of the water separator housing. This reduces the overall package size of the one-stage water separator device. Installation in small installation spaces becomes possible.

In another embodiment an inlet channel diameter of the water-laden volume flow inlet channel increases in a direction towards the water separation chamber for decreasing a flow velocity of the water-laden volume flow.

A one-stage water separator device is provided in which the flow velocity of the water-laden volume flow is reduced upon entering the water separation chamber. To this end, the inlet channel diameter increases in the direction towards the water separation chamber. Said increase can be conical in shape, for example. The increase may begin at an end of the water-laden volume flow inlet channel adjacent to the water-laden volume flow inlet port. The increase may terminate when the water-laden volume flow inlet channel reaches the water separation chamber. The reduction in flow velocity results in a more even distribution of the water droplets contained in the water-laden volume flow within the water separation chamber. The water separation performance can be increased.

### Brief Description of Drawings

Further advantages can be seen in the following description of the drawings. The drawings show examples of the embodiments. The drawings, description and claims contain numerous features in combination. The person skilled in the art will expediently consider the features individually and combine them to form further useful combinations.
Figure 1 shows a sectional view of a one-stage water separator device according to the embodiments.
Figure 2 shows a perspective view of the one-stage water separator device according to the embodiments.
Figure 3 shows a sectional view of a one-stage water separator device according to the embodiments.
Figure 4 shows a perspective view of the one-stage water separator device according to the embodiments.

### Description of Embodiments

The figures only show examples and are not to be understood as limiting.

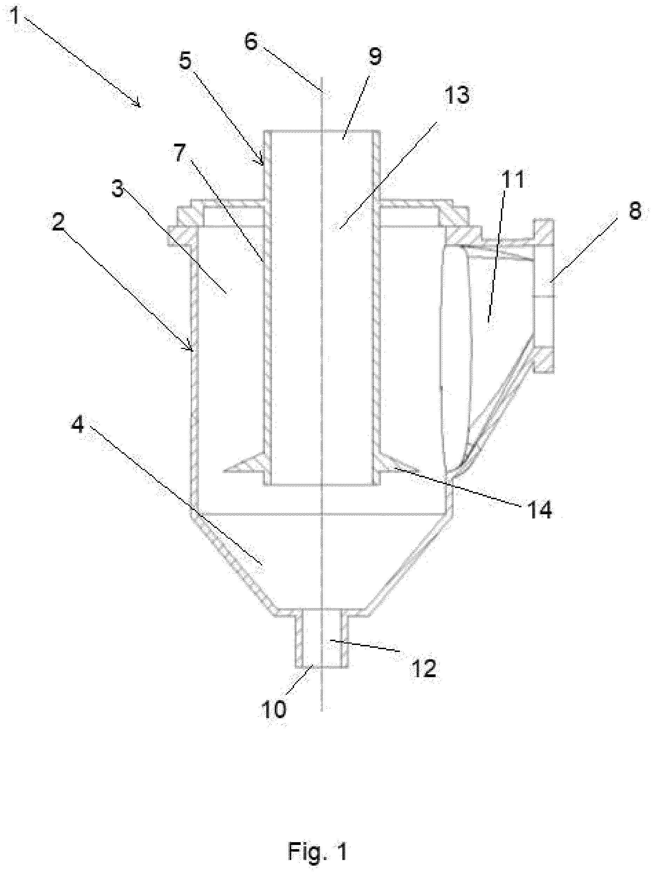

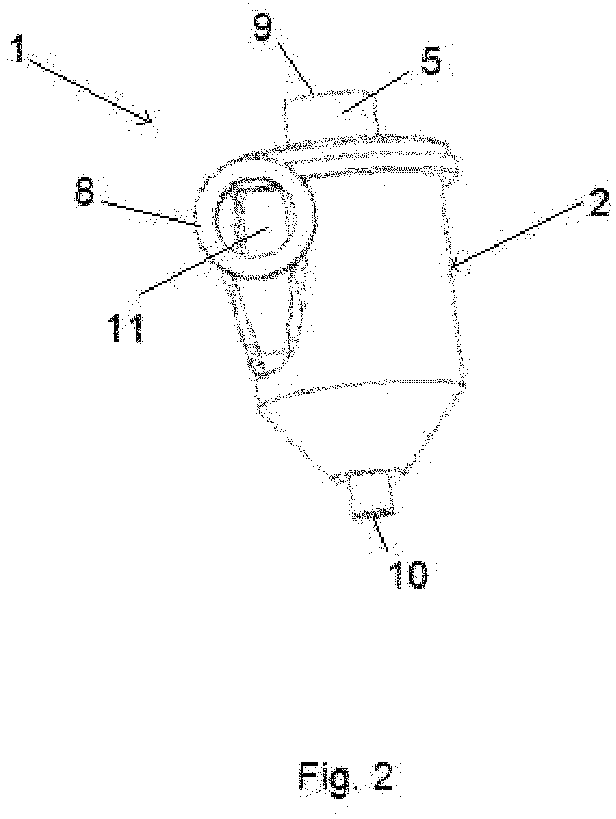

Reference is now made concurrently to Figure 1 and Figure 2. In those figures a one-stage water separator device 1 is shown. The one-stage water separator device 1 comprises a water separator housing 2. The water separator housing 2 comprises a water separation chamber 3 and a water collection chamber 4. An immersion tube 5 is arranged coaxially with a center axis 6 of the water separator housing 2. The immersion tube 5 comprises an immersion tube portion 7 which is immersed within the water separation chamber 3. The water separator housing 2 further comprises a water-laden volume flow inlet port 8 and a water-unladen volume flow outlet port 9. Additionally a water volume flow outlet port 10 is provided.

Such a one-stage water separator device 1 is typically used in fuel cell vehicles. In such an application the exhaust gas side of the anode path is considered. Said exhaust gas side generally provides a water-laden volume flow. The water-laden volume flow typically comprises an air or gas volume flow which is laden with water in the form of water droplets. Said water-laden volume flow enters the one-stage water separator device 1 via the water-laden volume flow inlet port 8. It then flows through a water-laden volume flow inlet channel 11. The water-laden volume flow inlet channel 11 is shown conically tapered. An inlet channel diameter of the water-laden volume flow inlet channel 11 increases in a direction towards the water separation chamber 3. The inlet channel diameter runs inclined to an axial direction of the immersion tube portion 7, i.e., the center axis 6. The inlet channel diameter reaches a maximum extension upon its opening into the water separation chamber 3. As such, an axial end of the inlet channel diameter facing the water separation chamber 3 essentially corresponds to an axial end of the immersion tube portion 7 facing the water collection chamber 4. In the embodiments shown the maximum axial extension of the inlet channel diameter essentially corresponds to an axial extension of the immersion tube portion 7.

As the inlet channel diameter increases the flow velocity of the water-laden volume flow flowing through the water-laden volume flow inlet channel 11 decreases. The deceleration of the water-laden volume flow achieves a more even distribution of the water droplets contained in the water-laden volume flow within the water separation chamber 3. Inside the water separation chamber 3 the water droplets in the water-laden volume flow then adhere to the inner wall of the water separation chamber 3. During this adhesion process water droplets of different sizes merge with each other. The so-formed larger water droplets are heavier and thus subjected to larger gravitational pull. Said gravitational pull acts in a direction towards the water collection chamber 4.

Over time the water content of the water-laden volume flow accumulates inside the water collection chamber 4. Thus, a water volume flow is generated within the water collection chamber 4. Said water volume flow exits the water collection chamber 4 via a water volume flow outlet channel 12. The remaining volume flow constitutes a water-unladen volume flow consisting of the remaining volume flow without the water droplets previously present in the water-laden volume flow, i.e., typically of an air or gas volume flow. It flows inside the water separation chamber 3 through a water-unladen volume flow outlet channel 13. The water-unladen volume flow outlet channel 13 channels the water-unladen volume flow through the immersion tube portion 7 to the water-unladen volume flow outlet port 9 out of the one-stage water separator device 1.

In Fig. 1 the embodiments are shown where a deflector projection 14 is arranged at an outer wall of the immersion tube portion 7. The deflector projection 14 extends in a circumferential direction of the immersion tube portion 7. It extends around the entire circumference of the immersion tube portion 7. The deflector projection 14 serves a dual purpose. On the one hand, it deflects the water-laden volume flow inside the water separation chamber 3 to the inner walls of the latter. The water droplets still contained in an inner zone of the water-laden volume flow may then move radially outwards and adhere to the inner walls of the water separation chamber 3. There they may combine with other water droplets to form larger water droplets. Said larger water droplets may then descend into the water collection chamber 4 by means of gravity. Hence, the water separation performance is improved. On the other hand, the deflector projection 14 also constitutes a water volume flow barrier between the water separation chamber 3 and the water collection chamber 4. Water droplets whirled up inside the water separation chamber 3 hit the deflector projection 14 and are deflected back into the water separation chamber 3. They are thereby prevented from re-entering the water separation chamber 3.

It can also be seen from Fig. 1 that a radial extension of the immersion tube portion 7 corresponds to approximately one half of a radial extension of the water separation chamber 3. The radial direction is perpendicular to the center axis 6. The radial extension of the immersion tube portion 7 is therefore dimensioned relatively large compared to the radial extension of the water separation chamber 3. As a result, the flow velocity of the water-unladen volume flow within the water-unladen volume flow outlet channel 13 is reduced. This is considered advantageous from different points of view. On the one hand, different components of the fuel cell vehicle to which the water-unladen volume flow is communicated may require lower flow velocities of the water-unladen volume flow. On the other hand, the amount of water droplets potentially still dragged along in the water-unladen volume flow is reduced as the flow velocity of the water-unladen volume flow decreases.

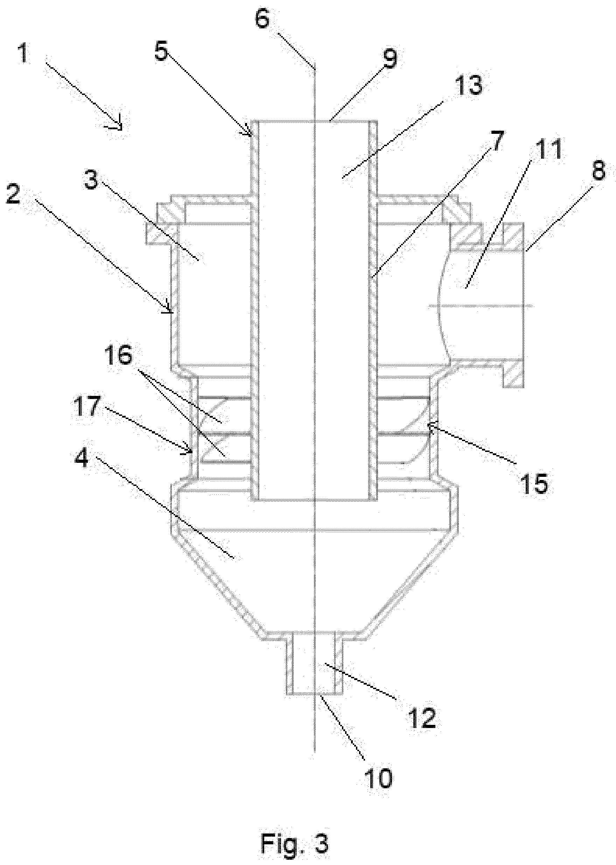

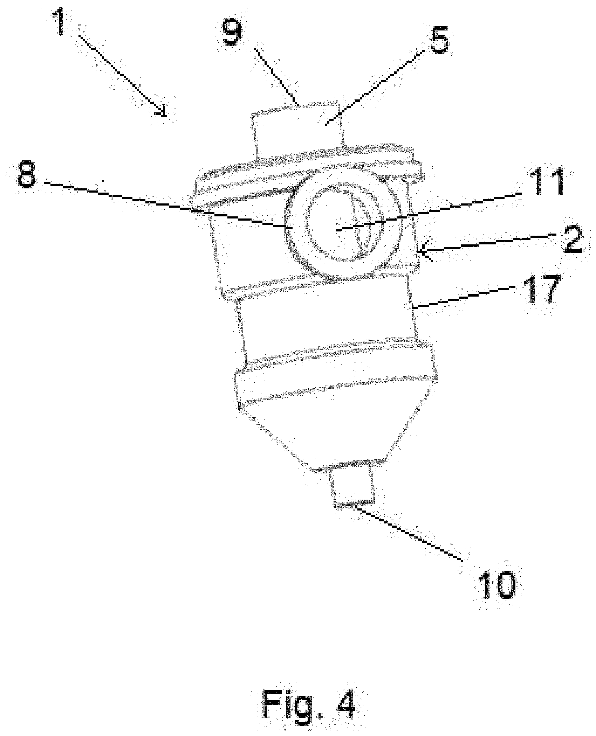

Reference is now made concurrently to Figure 3 and Figure 4. In those figures a one-stage water separator device 1 is shown. Identical reference numerals denote identical features.

In these embodiments a swirl generator 15 is provided within the water separation chamber 3. The swirl generator 15 comprises a plurality of vanes 16 arranged in a circumferential direction at an axial end of the immersion tube portion 7 facing the water collection chamber 4. An angled position of the vanes cause a swirl of the water-laden volume flow within the water separation chamber 3. As a result, the centrifugal force acting on the water droplets within the water-laden volume flow creates a water film on the inner walls of the water separation chamber 3. This water film may then flow into the water collection chamber 4.

As can be clearly seen in Fig. 3 the swirl generator 15 is arranged within a constriction 17 of the water separator housing 2. The constriction 17 essentially covers the axial length of the swirl generator 15 parallel to the center axis 6. As a result, the distance between the swirl generator 15 (its vanes 16, respectively) and the inner walls of the water separation chamber 3 is reduced to a well-defined minimal value. The decrease in the radial extension (perpendicular to the center axis 6) in the region of the constriction 17 achieves a higher flow velocity of the water-laden volume flow in said region. The water separation performance is improved.

As can be seen from a comparison of Fig. 2 and Fig. 4 the water-laden volume flow inlet port 8 may be arranged tangentially or perpendicularly to a circumferential direction of the water separator housing 2.

### Reference Signs List

- 1: one-stage water separator device
- 2: water separator housing
- 3: water separation chamber
- 4: water collection chamber
- 5: immersion tube
- 6: center axis
- 7: immersion tube portion
- 8: water-laden volume flow inlet port
- 9: water-unladen volume flow outlet port
- 10: water volume flow outlet port
- 11: water-laden volume flow inlet channel
- 12: water volume flow outlet channel
- 13: water-unladen volume flow outlet channel
- 14: deflector projection
- 15: swirl generator
- 16: vane
- 17: constriction

## Claims

1. A one-stage water separator device (1) comprising:
a water separator housing (2) comprising a water separation chamber (3) and a water collection chamber (4);
a water-laden volume flow inlet port (8) defining a water-laden volume flow inlet channel (11) for channeling a water-laden volume flow into the water separation chamber (3);
a water volume flow outlet port (10) defining a water volume flow outlet channel (12) for channeling a water volume flow out of the water collection chamber (4);
a water-unladen volume flow outlet port (9) defining a water-unladen volume flow outlet channel (13) for channeling a water-unladen volume flow out of the water separation chamber (3); and
an immersion tube (5) comprising an immersion tube portion (7) immersed in the water separation chamber (3) and for fluidically connecting the water-unladen volume flow outlet port (9) with the water separation chamber (3),
**characterized in that** an axial extension of the immersion tube portion (7) essentially corresponds to an axial transition area between the water separation chamber (3) and the water collection chamber (4).

2. The one-stage water separator device (1) according to claim 1, wherein a maximum axial extension of an inlet channel diameter of the water-laden volume flow inlet channel (11) essentially corresponds to an axial extension of the immersion tube portion (7).

3. The one-stage water separator device (1) according to claim 2, wherein an axial end of the inlet channel diameter facing the water separation chamber (3) essentially corresponds to an axial end of the immersion tube portion (7) facing the water collection chamber (4).

4. The one-stage water separator device (1) according to any of claims 1 to 3, wherein the axial extension of the immersion tube portion (7) essentially corresponds to an axial extension of the water separation chamber (3).

5. The one-stage water separator device (1) according to any of claims 1 to 4, wherein a radial extension of the immersion tube portion (7) corresponds to at least one half of a radial extension of the water separation chamber (3).

6. The one-stage water separator device (1) according to any of claims 1 to 5, wherein the immersion tube (5) further comprises a deflector projection (14) for deflecting the water-laden volume flow, the deflector projection (14) being arranged at an end of the immersion tube portion (7) facing the water collection chamber (4).

7. The one-stage water separator device (1) according to claim 1 or 4, further comprising a swirl generator (15) for generating a swirl in the water-laden volume flow, the swirl generator (15) being arranged at an end of the immersion tube portion (7) facing the water collection chamber (4).

8. The one-stage water separator device (1) according to claim 7, wherein a radial extension of the water separation chamber (3) is essentially constricted to a radial extension of the swirl generator (15) over essentially an entire axial extension of the swirl generator (15).

9. The one-stage water separator device (1) according to claim 8, wherein the axial extension of the swirl generator (15) corresponds to at most one half of the axial extension of the immersion tube portion (7).

10. The one-stage water separator device (1) according to any of claims 1 to 9, wherein the water-laden volume flow inlet channel (11) is arranged essentially perpendicularly or tangentially to a circumferential direction of the water separator housing (2).

11. The one-stage water separator device (1) according to any of claims 1 to 6, wherein an inlet channel diameter of the water-laden volume flow inlet channel (11) increases in a direction towards the water separation chamber (3) for decreasing a flow velocity of the water-laden volume flow.
